# EUROPEAN PATENT SPECIFICATION

(11) **EP 3 101 951 B1**
(45) Date of publication and mention of the grant of the patent: **30.08.2023**
(21) Application number: 16171186.6
(22) Date of filing: 24.05.2016
(51) Int. Cl.: H04W 40/16, H04W 84/12

(54) **BIDIRECTIONAL REDUNDANT MESH NETWORKS**
REDUNDANTE BIDIREKTIONALE MESH-NETZWERKE
RÉSEAUX DE MAILLAGE REDONDANT BIDIRECTIONNEL

(30) Priority: 05.06.2015 US 201514731803
(43) Date of publication of application: 07.12.2016
(73) Proprietor: Honeywell International Inc., Morris Plains, NJ 07950 (US)
(72) Inventor: BEREZOWSKI, Andrew G., Morris Plains, NJ New Jersey 07950 (US); OTIS, Jesse J., Morris Plains, NJ New Jersey 07950 (US); PEARSON, Charles T., Morris Plains, NJ New Jersey 07950 (US)
(74) Representative: Houghton, Mark Phillip

(56) References cited:
- EP-A1- 2 020 787
- EP-A1- 2 677 835
- US-A1- 2008 253 386
- US-A1- 2015 156 815

## Description

### FIELD

The application pertains to bidirectional mesh networks that provide redundant communications paths. More particularly, the application pertains to such networks which incorporate multiple controllers or controller gateways and multiple communications paths.

### BACKGROUND

Systems are known to protect people and assets within secured areas. Such systems are typically based upon the use of one more wireless detectors that respond to threats within the secured area.

Threats to people and assets may originate from any of number of different sources. For example, a fire may kill or injure occupants who have become trapped by a fire in a home. Similarly, carbon monoxide from a fire may kill people in their sleep.

Alternatively, an unauthorized intruder, such as a burglar, may present a threat to assets within the area. Intruders have also been known to injure or kill people living within the area.

In the case of intruders, detectors, or, sensors may be placed in different areas based upon the respective uses of those areas. For example, if people are present during some portions of a normal day and not at other times, then detectors may be placed along a periphery of the space to provide protection while the space is occupied while additional sensors may be placed within an interior of the space and used when the space is not occupied.

In most cases, threat detectors are connected to a local control panel. In the event of a threat detected via one of the detectors, the control panel may sound a local audible alarm. The control panel may also send a signal to a displaced monitoring station.

While conventional security systems using wireless detectors work well, they are sometimes subject to unexpected failures. For example, fire and security systems that employ mesh networks with single controllers have a single point of failure that could result in lost communications to one or more areas protected by the system. A need exists for better methods and apparatus for diagnosing such systems.
US Patent Application Publication No. US 2015/0156815A1 describes a wireless mesh network including wireless access points connected to each other through a network of wireless backhaul links, connected to a controller and a wired network, and describes a method of maintaining connectivity despite loss of a controller.
US Patent Application Publication No. US 2008/0253386A1 describes a method of arranging a dense mesh network including controllers. Nodes with too much interference are assigned to different channels. Nodes that are too close together are assigned to different gateway controllers.

### SUMMARY OF INVENTION

The present invention is defined by the appended claims.

### BRIEF DESCRIPTION OF THE DRAWINGS

Fig. 1 illustrates a block diagram of a system in accordance herewith;
Fig. 2 illustrates a block diagram of a second system in accordance herewith;
Fig. 3 illustrates a block diagram of a third system in accordance herewith;
Fig. 4 illustrates a block diagram of a fourth system in accordance herewith;
Fig. 5 illustrates a block diagram of a fifth system in accordance herewith;
Fig. 6 illustrates a block diagram of a sixth system in accordance herewith;
Fig. 7 illustrates a block diagram of a seventh system in accordance herewith;
Fig. 8 illustrates a block diagram of an eighth system in accordance herewith;
Fig 9 illustrates a block diagram of a ninth system in accordance herewith; and
Fig. 10 illustrates a block diagram of a tenth system in accordance herewith.

### DETAILED DESCRIPTION

While disclosed embodiments can take many different forms, specific embodiments thereof are shown in the drawings and will be described herein in detail with the understanding that the present disclosure is to be considered as an exemplification of the principles thereof as well as the best mode of practicing same, and is not intended to limit the application or claims to the specific embodiment illustrated.

Systems in accordance herewith provide redundant communications pathways in fire and security systems employing mesh networks. Furthermore, since fire and security systems may use a hybrid combination of wired networks and wireless mesh elements, in another configuration, the wired and wireless portions can be integrated while providing redundant communications paths throughout the system.

In one aspect, each wireless mesh network can contain multiple controllers and a plurality of mesh elements. The mesh elements can include, without limitation, detectors of various types including security related detectors such as glass break detectors, position detectors, motion detectors or door detectors. Other detector types include ambient condition detectors such as fire detectors, gas detectors, thermal detectors, water or humidity detectors.

The controllers may be used to interface the elements of the mesh networks to the wired elements of the system. Each controller determines the parent/child relationships for the mesh elements and communicates with all mesh elements via a bidirectional time slotted, or, frequency allocation method. The time slotted or frequency allocation processes, as would be understood by those of skill are unique to each controller for a given mesh network. As a result, each controller receives communications from all network elements redundantly.

Each controller in a given mesh network will retransmit any communication received from the transmitting mesh elements to all of the mesh elements. In that way, all mesh elements receive all communications redundantly. The system communications are unaffected by the failure of all but one controller.

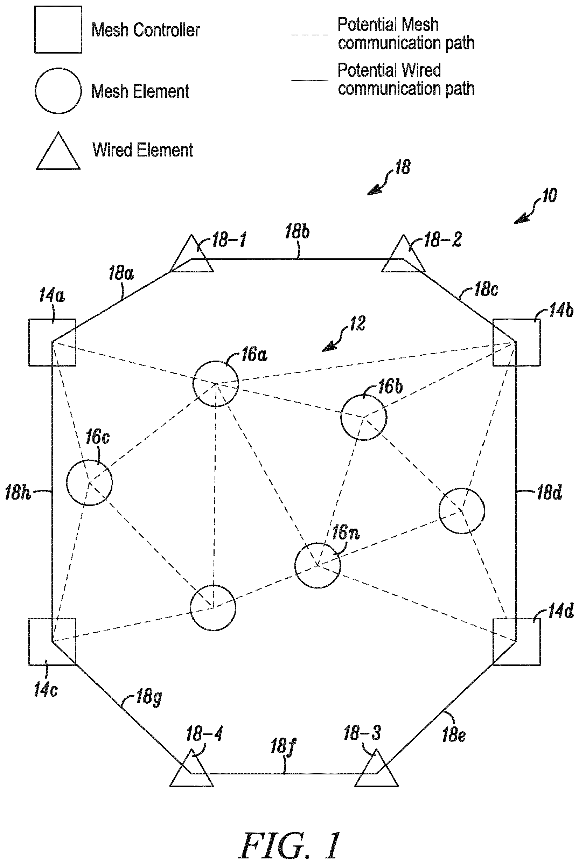

Fig. 1 illustrates a first embodiment 10. Here messages originating in the wireless mesh network 12 from detectors or other elements, such as 16a, 16b...16n, are usually received by each controller, such as 14a, 14b, 14c and 14d. The respective controllers, such as 14a... 14d, in turn retransmit the message to the wireless elements, such as 16i, of the mesh network. The message is then transmitted on a wired path, or paths such as 18i, if the message has not already been received or transmitted on that path, or paths. This eliminates circular message paths.

In the event one of the wireless controllers, such as 14i, does not receive the message wirelessly within the system propagation time, the respective controller sends the message received by wire, such as from path 18i, to the wireless mesh elements with which it is in communication. The system communications are unaffected by the failure of all but the last controller.

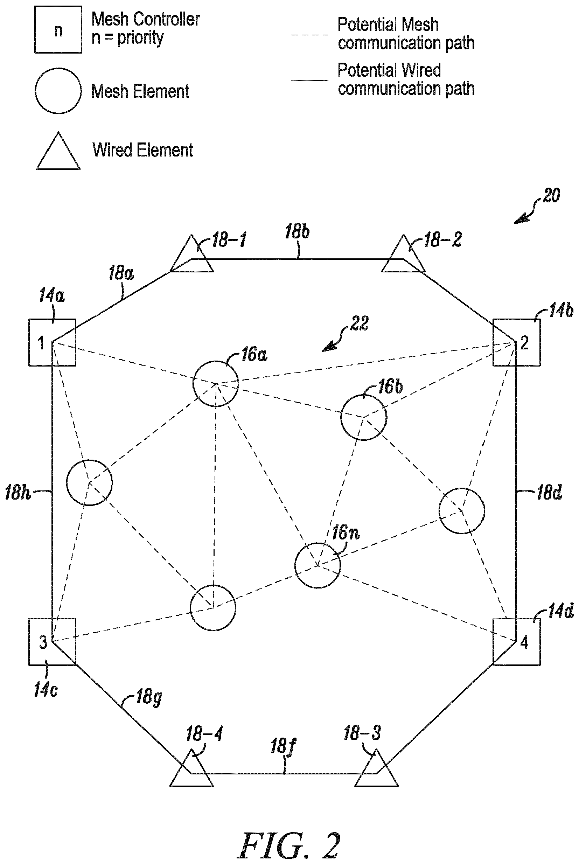

In another embodiment 20, illustrated in Fig.2, each wireless mesh network, such as 22, will contain multiple controllers and a number of mesh elements. It will be understood that elements and controllers of a type previously described above have been assigned an identical identification numeral that corresponds to that of Fig. 1. They need not be discussed further, except as set forth below.

The controllers may be used to interface the mesh network 22 to the wired elements 18-1, -2, -3 and 18-4 of the system 20. Each controller, such as 14a...14d, determines the parent/child relationships for the mesh elements, such as 16i, relative to itself as if it were the master of communications of the mesh network.

As indicated in Fig. 2, a hierarchy of mesh controllers, 14a...14d, can be established so that only one controller communicates with all mesh elements. Communications can be effected, without limitation, using a bidirectional time slotted or frequency allocation method.

When messages are received by the controller, such as 14a...14d, from one or more mesh elements, such as 16i, including the redundant controllers, the controller with highest priority, such as 14a, retransmits the communications to all elements of the mesh network 22, including the redundant controllers. Advantageously with this process, all elements of the mesh network 22 receive all messages from all mesh elements.

Health messages within the mesh network 22 are transmitted periodically. When one or more health messages are missed, not received or responded to, by an element within the mesh, the element will switch to the next highest controller parent/child relationships and time slotted or frequency allocated scheme.

The highest priority controller retransmits messages received to the mesh elements if it has not already done so successfully, and then transmits the message on a wired path if the message has not already been received or transmitted on that path. The lower priority controllers transmit the message on a wired path if the message has not already been received or transmitted on that path. This eliminates circular message paths.

Controllers that receive a message on a wired path, such as 18a...18n, transmit the message on other wired paths if the message has not already been received or transmitted on that wired path. For added redundancy, the lower priority controllers, such as 14b, 14c, 14d, may retransmit messages received on a wired path, such as 18i, wirelessly to the highest priority controller.

The communications of system 20 are unaffected by the failure of all but the last operating controller. It also exhibits reduced radio traffic requirements relative to the embodiment 10 of Fig.1.

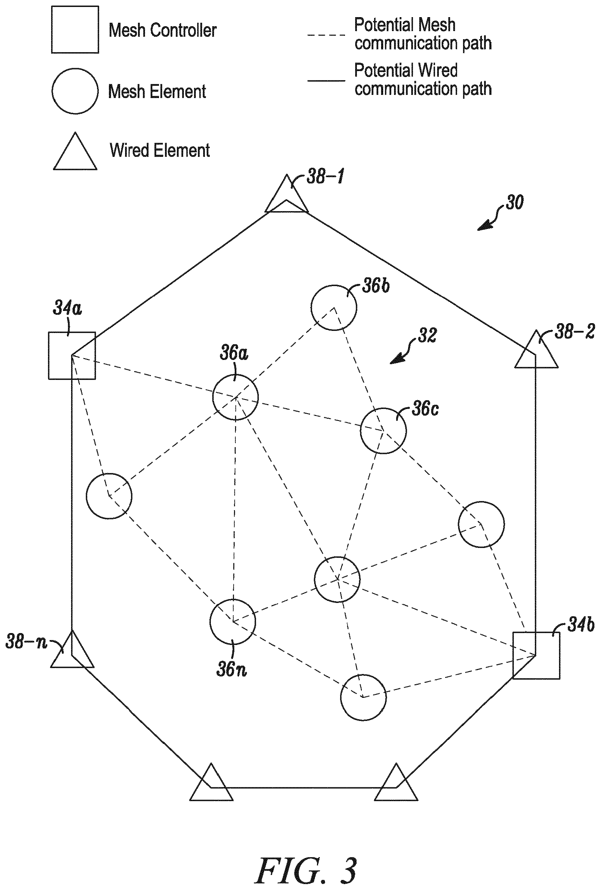

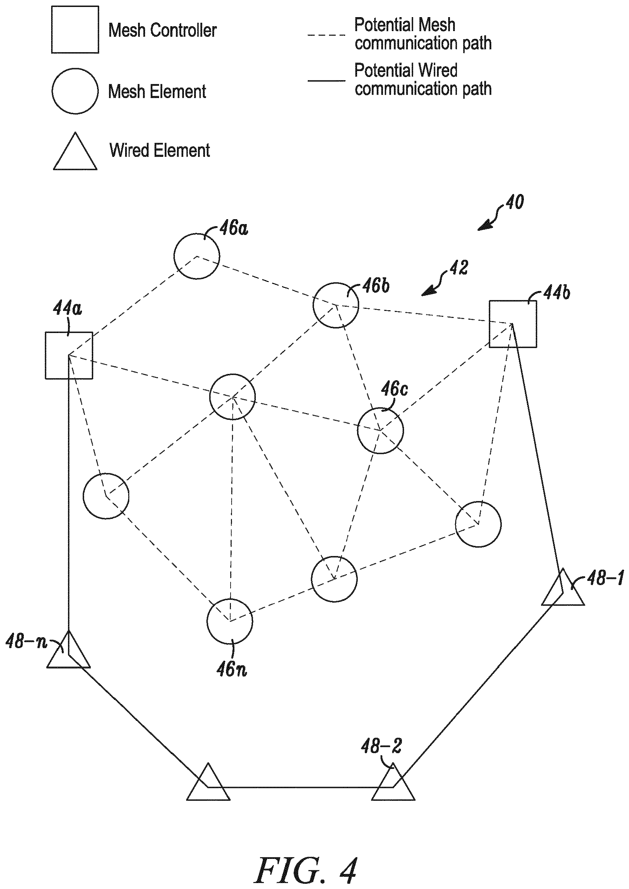

In other embodiments, 30, 40 illustrated in Figs. 3,4, each wireless mesh network, such as 32, 42, contains two controllers, such s 34a, 34b, and 44a, 44b, and a number of mesh elements, such as 36a..36n and 46a..46n. The controllers may be used to interface the mesh, and mesh elements to the wired elements, such as 38-1 ...38-n and 48-1 ...48-n of the respective system. The two controllers arrange the mesh parent/child structure such that one controller assumes the first time slot and the other controller the last time slot of a time slotted communication scheme. The controllers arrange the mesh such that each element has a redundant communication path to both controllers.

Each controller in a given mesh may retransmit any communication received from the transmitting mesh elements to all the mesh elements. In that way all mesh elements could receive all communications redundantly. A message originating in the mesh is retransmitted to the mesh elements by the controller that first receives it.

Controllers that receive a message transmit the message on wired paths if the message has not already been received or transmitted on that wired path. The system communications are unaffected by the failure of any one controller.

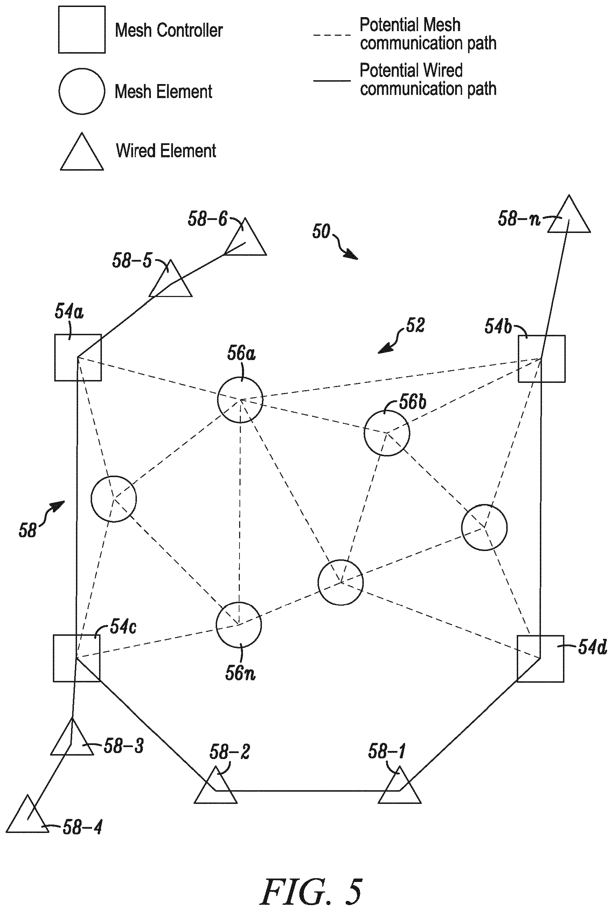

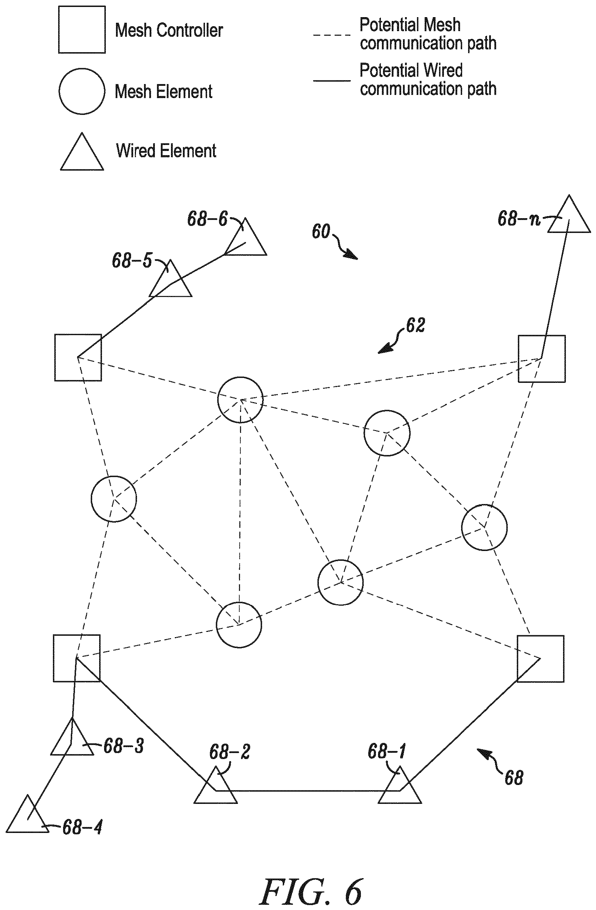

Variations of the embodiments including branches and non-redundant wire segments 58, 68 are also possible as illustrated in Fig. 5 in network 50 and Fig. 6 in network 60.

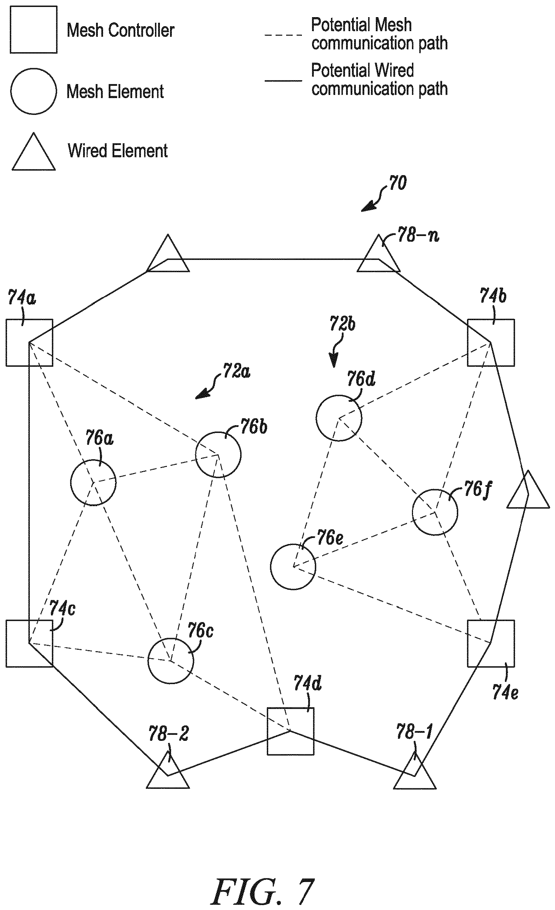

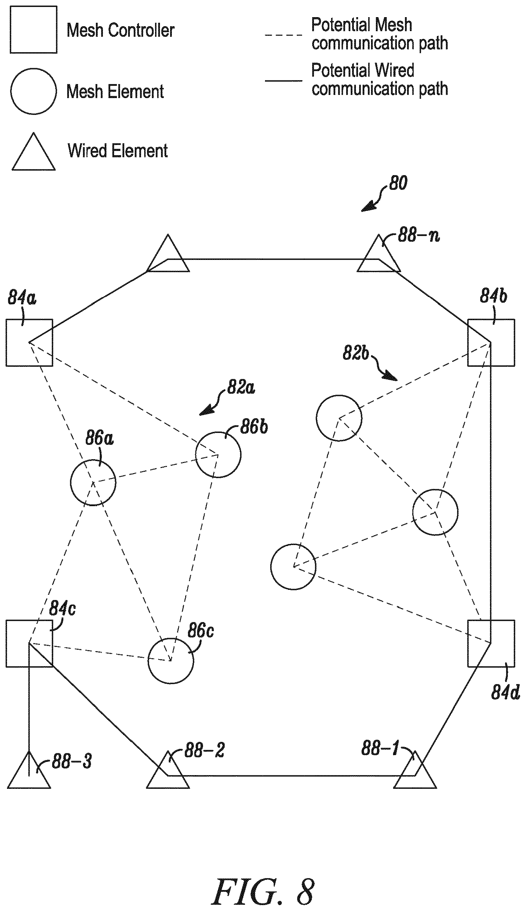

Additional embodiments may include multiple mesh networks 72a,b and 82a,b in various combinations as illustrated in Figs. 7 and 8.

In summary, the architecture of the network may be integrated into a peer-to-peer network as in the networks illustrated in Figs. 1-8. Such configurations are applicable to commercially available, or installed, networks such as the NOTIFIER Brand Fire-Network (NFN), The NOTIFIER Brand Digital Audio Loop (DAL), the FIRE-LITE Brand Lite Connect Network, or Gamewell Fire Control-type ring networks where each controller/element includes a transceiver in direct communication with one or two peer elements via wire or fiber. The architecture may also be applicable for use in a network of multiple I/O devices as mesh elements with multiple control panels as the mesh controllers for Safety Integrity Level (SIL) rated installations.

Advantageously, the above embodiments can be expected to meet the requirements of National Fire Protection Association (NFPA) Proposed Standard 72 2016 Class Designations A, N, and X. Further, the above embodiments can be incorporated into systems required to meet the SIL requirements as a measure of reliability and/or risk reduction. Examples include:
- ANSI/ISA S84 (Functional safety of safety instrumented systems for the process industry sector)
- IEC EN 61508 (Functional safety of electrical/electronic/programmable electronic safety related systems)
- IEC 61511 (Safety instrumented systems for the process industry sector)
- IEC 61513 (Nuclear Industry)
- EN 50402 (Fixed gas detection systems).

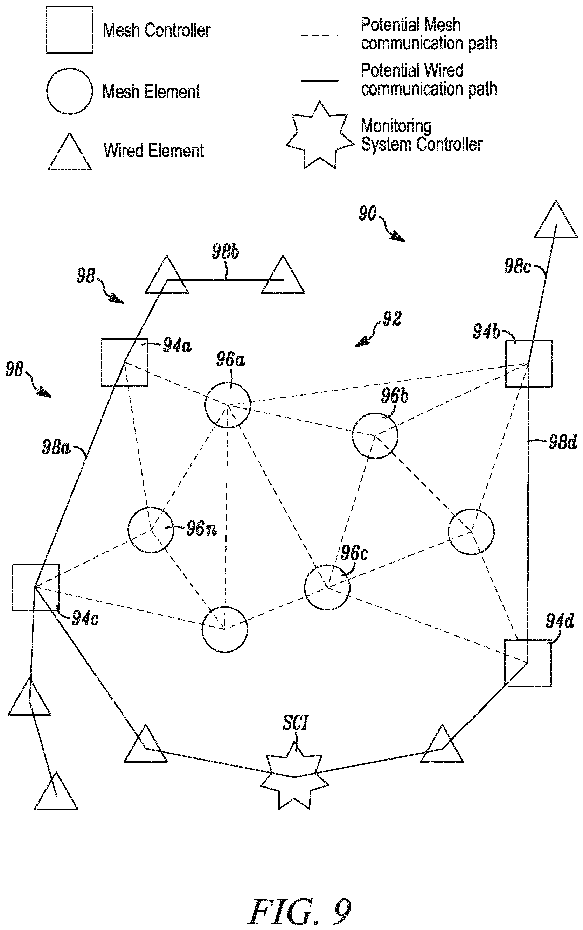

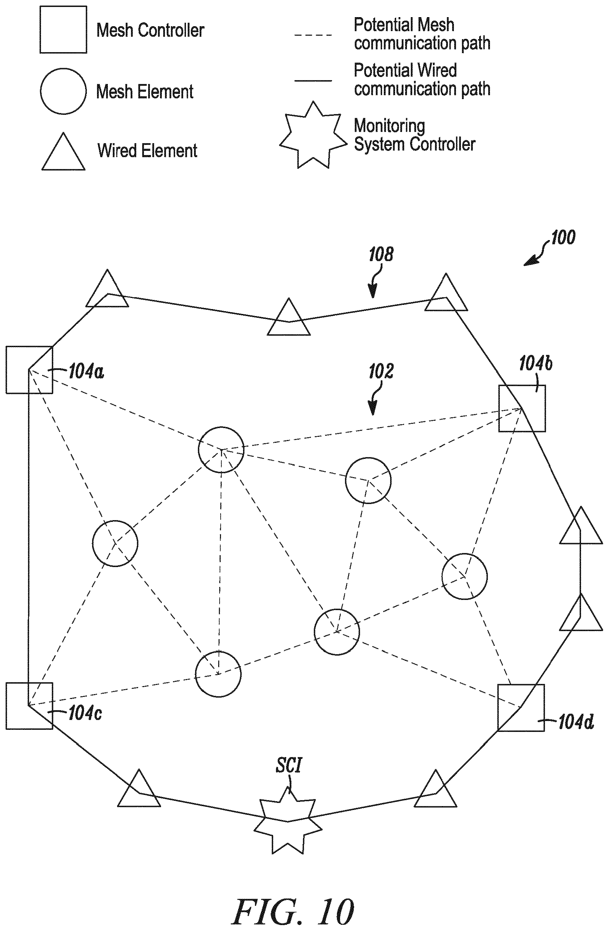

The architecture of the network may also be integrated into a bus network as in the networks 90, 100 of Figs. 9 and 10. In those embodiments, each wireless element 92, 102 is communicating with multiple mesh controllers 94, 104 that are connected to the same system controller CS1 via a multi-path bus connection 98, 108. This is applicable to signaling line circuit (SLC) networks or bus communication networks.

In summary, embodiments hereof advantageously avoid single point network failures. Also, such networks can be used as bidirectional transport mediums for messages in larger mixed medium networks.

## Claims

1. An apparatus comprising:
a plurality of controllers (14), wherein each of the plurality of controllers (14) is adapted to communicate with at least one other controller of the plurality of controllers (14) via a wired medium (18a to 18n); and
a plurality of wireless elements (16) adapted to communicate with the plurality of controllers (14) via a wireless medium (12); and
wherein, when a first controller of the plurality of controllers (14) receives a first message from a first wireless element of the plurality of wireless elements (16), the first controller transmits the first message to the plurality of wireless elements (16) via the wireless medium (12),
wherein, when the first controller receives the first message from the first wireless element (16), the first controller determines whether the first message has been transmitted to the plurality of controllers (14) via the wired medium (18a-18n), and
wherein, when the first controller determines that the first message has not been transmitted to the plurality of controllers (14) via the wired medium (18a-18n), the first controller transmits the first message to the plurality of controllers (14) via the wired medium (18a to 18n).

2. The apparatus as in claim 1 wherein the first plurality of wireless elements (16) comprises first and second wireless mesh communications networks.

3. The apparatus as in claim 1 wherein the plurality of controllers (14) includes circuitry to route wireless messages via the wired medium (18a to 18n) to the plurality of controllers (14), thereby avoiding a single point of failure.

4. The apparatus as in claim 1 wherein the first plurality of wireless elements (16) comprises first and second wireless mesh communications networks that communicate with each other via the wired medium (18a to 18n).

5. The apparatus as in claim 1 wherein some members of the plurality of controllers (14) communicate only with a single other member of the plurality of controllers (14).

6. The apparatus as in claim 1 wherein at least some of the plurality of wireless elements (16) are selected from a class that includes at least glass break detectors, position detectors, motion detectors, door detectors, fire detectors, gas detectors, thermal detectors, water or humidity detectors, control panels, system annunciation panels, smoke control panels, audio panels, visual indication panels, and audible or visual output devices.

7. The apparatus as in claim 1 further comprising a monitoring system control panel coupled to at least one of the plurality of controllers (14).

8. The apparatus as in claim 1 further comprising circuitry to assign a priority value to each of the plurality of controllers (14), wherein a highest priority one of the plurality of controllers communicates with all members of the plurality of wireless elements (16).

9. The apparatus as in claim 8 wherein health assessing messages are transmitted among members of the plurality of wireless elements (16) or the plurality of controllers (14).

10. A method comprising:
providing a plurality of wireless elements (16);
providing a plurality of controllers (14);
providing a wireless communications path (12) between a first controller of the plurality of controllers (14) and the plurality of wireless elements (16);
providing a wired communications path (18a) between the plurality of controllers (14);
the first controller receiving a first message from a first wireless element of the plurality of wireless elements (16);
the first controller retransmitting the first message to the plurality of wireless elements (16) via the wireless communications path in response to receiving the first message;
the first controller determining whether the first message has been transmitted to the plurality of controllers (14) via the wired communications path in response to receiving the first message; and
when the first controller determines that the first message has not been transmitted to the plurality of controllers (14) via the wired communications path, the first controller retransmitting the first message to the plurality of controllers (14) via the wired communications path (18a).

11. The method as in claim 10 further comprising providing communications on the wired communications path (18a) with the first controller.

12. The method as in claim 11 further comprising coupling the first wireless element (16) to the plurality of controllers (14) via multiple paths.

13. The method as in claim 10 further comprising establishing a priority for each of the plurality of controllers (14), wherein a highest priority one of the plurality of controllers carries out communications with the first plurality of wireless elements (16).

## Patentansprüche

1. Vorrichtung, umfassend:
eine Vielzahl von Steuereinheiten (14), wobei jede der Vielzahl von Steuereinheiten (14) ausgelegt ist, um mit mindestens einer anderen Steuereinheit der Vielzahl von Steuereinheiten (14) über ein drahtgebundenes Medium (18a bis 18n) zu kommunizieren; und
eine Vielzahl von Drahtlos-Elementen (16), die ausgelegt sind, um mit der Vielzahl von Steuereinheiten (14) über ein Drahtlos-Medium (18a) zu kommunizieren; und
wobei, wenn eine erste Steuereinheit der Vielzahl von Steuereinheiten (14) eine erste Nachricht von einem ersten Drahtlos-Element der Vielzahl von Drahtlos-Elementen (16) empfängt, die erste Steuereinheit die erste Nachricht zu der Vielzahl von Drahtlos-Elementen (16) über das Drahtlos-Medium (12) überträgt,
wobei, wenn die erste Steuereinheit die erste Nachricht von dem ersten Drahtlos-Element (16) empfängt, die erste Steuereinheit ermittelt, ob die erste Nachricht zu der Vielzahl von Steuereinheiten (14) über das drahtgebundene Medium (18a bis 18n) übertragen wurde, und
wobei, wenn die erste Steuereinheit feststellt, dass die erste Nachricht zu der Vielzahl von Steuereinheiten (14) nicht über das drahtgebundene Medium (18a bis 18n) übertragen wurde, die erste Steuereinheit die erste Nachricht zu der Vielzahl von Steuereinheiten (14) über das drahtgebundene Medium (12) überträgt.

2. Vorrichtung nach Anspruch 1, wobei die erste Vielzahl von Drahtlos-Elementen (16) ein erstes und ein zweites Drahtlos-Mesh-Kommunikationsnetzwerk umfasst.

3. Vorrichtung nach Anspruch 1, wobei die Vielzahl von Steuereinheiten (14) Schaltungen einschließen, um Drahtlos-Nachrichten über das drahtgebundene Medium (12) zu der Vielzahl von Steuereinheiten (14) zu leiten, wodurch ein einzelner Ausfallpunkt vermieden wird.

4. Vorrichtung nach Anspruch 1, wobei die erste Vielzahl von Drahtlos-Elementen (16) ein erstes und ein zweites Drahtlos-Mesh-Kommunikationsnetzwerk umfasst, die über das drahtgebundene Medium (12) miteinander kommunizieren.

5. Vorrichtung nach Anspruch 1, wobei einige Mitglieder der Vielzahl von Steuereinheiten (14) nur mit einem einzigen anderen Mitglied der Vielzahl von Steuereinheiten (14) kommunizieren.

6. Vorrichtung nach Anspruch 1, wobei mindestens einige der Vielzahl von Drahtlos-Elementen (16) aus einer Klasse ausgewählt sind, die mindestens Glasbruchmelder, Positionsmelder, Bewegungsmelder, Türmelder, Feuermelder, Gasmelder, Wärmemelder, Wasser- oder Feuchtigkeitsmelder, Bedienfelder, Systemmeldetafeln, Rauchmeldetafeln, Audiotafeln, Sichtanzeigetafeln und akustische oder optische Ausgabevorrichtungen einschließen.

7. Vorrichtung nach Anspruch 1, ferner umfassend ein Überwachungssystem-Bedienfeld, das mit mindestens einer der Vielzahl von Steuereinheiten (14) verbunden ist.

8. Vorrichtung nach Anspruch 1, ferner umfassend eine Schaltung zum Zuweisen eines Prioritätswerts zu jeder der Vielzahl von Steuereinheiten (14), wobei eine der Vielzahl von Steuereinheiten mit der höchsten Priorität mit allen Mitgliedern der Vielzahl von Drahtlos-Elementen (16) kommuniziert.

9. Vorrichtung nach Anspruch 8, wobei Zustandsbeurteilungsnachrichten zwischen Mitgliedern der Vielzahl von Drahtlos-Elementen (16) oder der Vielzahl von Steuereinheiten (14) übertragen werden.

10. Verfahren, umfassend:
Bereitstellen einer Vielzahl von Drahtlos-Elementen (16);
Bereitstellen einer Vielzahl von Steuereinheiten (14);
Bereitstellen eines Drahtlos-Kommunikationswegs (12) zwischen einer ersten Steuereinheit der Vielzahl von Steuereinheiten (14) und der Vielzahl von Drahtlos-Elementen (16);
Bereitstellen eines drahtgebundenen Kommunikationswegs (18a) zwischen der Vielzahl von Steuereinheiten (14);
wobei die erste Steuereinheit eine erste Nachricht von einem ersten Drahtlos-Element der Vielzahl von Drahtlos-Elementen (16) empfängt;
wobei die erste Steuereinheit die erste Nachricht zu der Vielzahl von Drahtlos-Elementen (16) über den Drahtlos-Kommunikationsweg als Reaktion auf das Empfangen der ersten Nachricht weiterleitet;
wobei die erste Steuereinheit ermittelt, ob die erste Nachricht zu der Vielzahl von Steuereinheiten (14) über den drahtgebundenen Kommunikationsweg als Reaktion auf das Empfangen der ersten Nachricht übertragen wurde; und
wenn die erste Steuereinheit feststellt, dass die erste Nachricht nicht über den drahtgebundenen Kommunikationsweg zu der Vielzahl von Steuereinheiten (14) übertragen wurde, die erste Steuereinheit die erste Nachricht zu der Vielzahl von Steuereinheiten (14) über den drahtgebundenen Kommunikationsweg (18a) weiterleitet.

11. Verfahren nach Anspruch 10, ferner umfassend das Bereitstellen von Kommunikation auf dem drahtgebundenen Kommunikationsweg (18a) mit der ersten Steuereinheit.

12. Verfahren nach Anspruch 11, ferner umfassend das Verbinden des ersten Drahtlos-Elements (16) mit der Vielzahl von Steuereinheiten (14) über mehrere Wege.

13. Verfahren nach Anspruch 10, ferner umfassend das Festlegem einer Priorität für jede der Vielzahl von Steuereinheiten (14), wobei eine der Vielzahl von Steuereinheiten mit der höchsten Priorität Kommunikation mit der ersten Vielzahl von Drahtlos-Elementen (12) ausführt.

## Revendications

1. Appareil comprenant :
une pluralité d'unités de commande (14), dans lequel chaque unité de commande de la pluralité d'unités de commande (14) est adaptée pour communiquer avec au moins une autre unité de commande de la pluralité d'unités de commande (14) par l'intermédiaire d'un support filaire (18a à 18n) ; et
une pluralité d'éléments sans fil (16) adaptés pour communiquer avec la pluralité d'unités de commande (14) par l'intermédiaire d'un support sans fil (18a) ; et
dans lequel, lorsqu'une première unité de commande de la pluralité d'unités de commande (14) reçoit un premier message provenant d'un premier élément sans fil de la pluralité d'éléments sans fil (16), la première unité de commande transmet le premier message à la pluralité d'éléments sans fil (16) par l'intermédiaire du support sans fil (12),
dans lequel, lorsque la première unité de commande reçoit le premier message provenant du premier élément sans fil (16), la première unité de commande détermine si le premier message a été transmis à la pluralité d'unités de commande (14) par l'intermédiaire du support filaire (18a à 18n) et
dans lequel, lorsque la première unité de commande détermine que le premier message n'a pas été transmis à la pluralité d'unités de commande (14) par l'intermédiaire du support filaire (18a à 18n), la première unité de commande transmet le premier message à la pluralité d'unités de commande (14) par l'intermédiaire du support filaire (12).

2. Appareil selon la revendication 1, dans lequel la première pluralité d'éléments sans fil (16) comprend des premier et second réseaux de communication maillés sans fil.

3. Appareil selon la revendication 1, dans lequel la pluralité d'unités de commande (14) comprend des circuits pour acheminer des messages sans fil par l'intermédiaire du support filaire (12) à la pluralité d'unités de commande (14), évitant ainsi un point de défaillance unique.

4. Appareil selon la revendication 1, dans lequel la première pluralité d'éléments sans fil (16) comprend des premier et second réseaux de communication maillés sans fil qui communiquent entre eux par l'intermédiaire du support filaire (12).

5. Appareil selon la revendication 1, dans lequel certains membres de la pluralité d'unités de commande (14) communiquent uniquement avec un seul autre membre de la pluralité d'unités de commande (14).

6. Appareil selon la revendication 1, dans lequel au moins certains éléments de la pluralité d'éléments sans fil (16) sont sélectionnés dans une classe qui comprend au moins des détecteurs de bris de glace, des détecteurs de position, des détecteurs de mouvement, des détecteurs de porte, des détecteurs d'incendie, des détecteurs de gaz, des détecteurs thermiques, des détecteurs d'eau ou d'humidité, des panneaux de commande, des panneaux d'annonce de système, des panneaux de contrôle des fumées, des panneaux audio, des panneaux d'indication visuelle et des dispositifs de sortie sonores ou visuels.

7. Appareil selon la revendication 1, comprenant en outre un panneau de commande de système de surveillance accouplé à au moins une unité de la pluralité d'unités de commande (14).

8. Appareil selon la revendication 1, comprenant en outre des circuits pour attribuer une valeur de priorité à chaque unité de la pluralité d'unités de commande (14), dans lequel une priorité la plus élevée de la pluralité d'unités de commande communique avec tous les membres de la pluralité d'éléments sans fil (16).

9. Appareil selon la revendication 8, dans lequel des messages d'évaluation de santé sont transmis parmi les membres de la pluralité d'éléments sans fil (16) ou de la pluralité d'unités de commande (14).

10. Procédé comprenant :
la fourniture d'une pluralité d'éléments sans fil (16) ;
la fourniture d'une pluralité d'unités de commande (14) ;
la fourniture d'un chemin de communication sans fil (12) entre une première unité de commande de la pluralité d'unités de commande (14) et la pluralité d'éléments sans fil (16) ;
la fourniture d'un chemin de communication filaire (18a) entre la pluralité d'unités de commande (14) ;
la première unité de commande recevant un premier message provenant d'un premier élément sans fil de la pluralité d'éléments sans fil (16) ;
la première unité de commande retransmettant le premier message à la pluralité d'éléments sans fil (16) par l'intermédiaire du chemin de communication sans fil en réponse à la réception du premier message ;
la première unité de commande déterminant si le premier message a été transmis à la pluralité d'unités de commande (14) par l'intermédiaire du chemin de communication filaire en réponse à la réception du premier message ; et
lorsque la première unité de commande détermine que le premier message n'a pas été transmis à la pluralité d'unités de commande (14) par l'intermédiaire du chemin de communication filaire, la première unité de commande retransmet le premier message à la pluralité d'unités de commande (14) par l'intermédiaire du chemin de communications filaire (18a).

11. Procédé selon la revendication 10, comprenant en outre la fourniture de communications sur le chemin de communication filaire (18a) avec la première unité de commande.

12. Procédé selon la revendication 11, comprenant en outre l'accouplement du premier élément sans fil (16) à la pluralité d'unités de commande (14) par l'intermédiaire de multiples chemins.

13. Procédé selon la revendication 10, comprenant en outre l'établissement d'une priorité pour chaque unité de la pluralité d'unités de commande (14), dans lequel une priorité la plus élevée de la pluralité d'unités de commande effectue des communications avec la première pluralité d'éléments sans fil (12).
